# EUROPÄISCHE PATENTSCHRIFT

(11) **EP 4 459 247 B1**
(45) Veröffentlichungstag und Bekanntmachung des Hinweises auf die Patenterteilung: **25.06.2025**
(21) Anmeldenummer: 24166213.9
(22) Anmeldetag: 26.03.2024
(51) Int. Cl.: G01G 21/28, G01G 21/30

(54) **STROMÜBERTRAGUNGSEINRICHTUNG FÜR EINE KRAFTMESSVORRICHTUNG, INSBESONDERE EINE WÄGEVORRICHTUNG**
CURRENT TRANSMISSION DEVICE FOR A FORCE MEASURING DEVICE, IN PARTICULAR A WEIGHING DEVICE
DISPOSITIF DE TRANSMISSION DE COURANT POUR UN DISPOSITIF DE MESURE DE FORCE, EN PARTICULIER UN DISPOSITIF DE PESÉE

(30) Priorität: 02.05.2023 DE 102023111325
(43) Veröffentlichungstag der Anmeldung: 06.11.2024
(73) Patentinhaber: WIPOTEC GmbH, 67657 Kaiserslautern (DE)
(72) Erfinder: Gottfriedsen, Jan, 67714 Waldfischbach-Burgalben (DE); Stellwagen, Tobias, 67659 Kaiserslautern (DE); Schulzki, Alexander, 67705 Stelzenberg (DE); Zinke, Bernd, 66399 Mandelbachtal (DE)
(74) Vertreter: Eder Schieschke & Partner mbB

(56) Entgegenhaltungen:
- WO-A1-2013/125418
- CN-U- 208 488 149
- JP-B2- 3 771 994

## Beschreibung

Die Erfindung betrifft eine Stromübertragungseinrichtung für eine Kraftmessvorrichtung, insbesondere eine Wägevorrichtung.

Bei der Übertragung von Strömen bzw. elektrischer Energie zwischen zwei relativ zueinander bewegbaren Bereichen einer Kraftmessvorrichtung ist es bei der Verwendung der Kraftmessvorrichtung in einer explosionsgefährdeten Atmosphäre erforderlich, geeignete Sicherheitsmaßnahmen zu ergreifen. Bei einer solchen Kraftmessvorrichtung kann es sich beispielsweise um eine Wägevorrichtung handeln, welche ein Förderband mit einem elektrischen Antrieb aufweist, das als Vorlast auf eine in einem Gehäuse der Wägevorrichtung angeordnete Wägezelle wirkt. Üblicherweise sind dabei sowohl elektrische Versorgungsleitungen vorgesehen, die beispielsweise von einem in dem Gehäuse der Wägevorrichtung vorgesehenen Netzteil oder einem am Gehäuse der Wägevorrichtung in einem separaten Gehäuse angeordneten Netzteil zu dem elektrischen Antrieb des Förderbandes geführt sind, als auch Kommunikationsleitungen, die von einer in dem Gehäuse der Wägevorrichtung vorgesehenen Steuereinheit zu dem elektrischen Antrieb des Förderbandes geführt sind.

Um eine derartige Wägevorrichtung explosionsgeschützt zu gestalten, sind verschiedene Methoden bekannt. Beispielsweise kann das gesamte Gehäuse mit einer Schutzgasatmosphäre befüllt werden. Da bei einer Wägevorrichtung aus dem Gehäuse immer ein Lastaufnehmer oder ein damit gekoppeltes Element möglichst berührungsfrei, d.h. mit geringem Kraftnebenschluss, herausgeführt sein muss, wäre es erforderlich, im Bereich der Durchführungsöffnung für den Lastaufnehmer entweder eine vollständig dichte Abdichtung zwischen dem Lastaufnehmer mit möglichst geringem Kraftnebenschluss vorzusehen, beispielsweise einen Faltenbalg, oder einen ausreichend geringen Spalt zwischen dem Lastaufnehmer und der Durchführungsöffnung vorzusehen, der auch mittels einer Labyrinthdichtung abgedichtet werden kann. Bei einer vollständig dichten Abdichtung kann das Gehäuse (statisch) mit einer Schutzgasatmosphäre gefüllt sein. Bei einem verbleibenden Spalt zwischen dem Lastaufnehmer und der Durchführungsöffnung muss laufend Schutzgas zugeführt werden (dynamische Schutzgasatmosphäre), um zu vermeiden, dass sich im Lauf der Zeit die Schutzgasatmosphäre so weit verdünnt, dass eine explosionsgefährdete Atmosphäre entsteht. Hierdurch entsteht in dem Gehäuse ein geringer Überdruck, der verhindert, dass sich in dem Gehäuse eine explosionsgefährdete Atmosphäre ausbildet. In diesem Fall kann anstelle eines Schutzgases auch normale Raumluft verwendet werden, sofern sichergestellt ist, dass diese Raumluft keine explosionsgefährdeten Bestandteile aufweist.

Eine solche Wägevorrichtung kann auch dadurch explosionsgeschützt ausgeführt werden, dass die Wägevorrichtung ein druckfestes Gehäuse bzw. eine druckfeste Kapselung aufweist, wobei das Gehäuse bzw. die Kapselung dem Druck eines gegebenenfalls im Gehäuse vorhandenen explosionsfähigen Gemisches standhalten muss und die Übertragung der Explosion nach außen verhindert. Dabei muss auch vermieden werden, dass Bestandteile des Gehäuses bzw. der Kapselung im Fall einer Explosion eines Gemischs im Gehäuseinneren geschossartig vom Gehäuse weggeschleudert werden. Weiterhin muss im Fall einer Explosion innerhalb des Gehäuses bzw. der Kapselung sichergestellt sein, dass keine Durchzündung in die Umgebung erfolgt, um zu vermeiden, dass im Fall einer außerhalb des Gehäuses bzw. der Kapselung vorhandenen explosionsgefährdeten Atmosphäre auch eine Explosion außerhalb des Gehäuses verursacht wird. Sind beispielsweise im Gehäuse Öffnungen, beispielsweise Durchtrittsöffnungen für bewegliche Komponenten, vorgesehen, so müssen diese so gestaltet sein, dass durch derartige Öffnungen keine durch eine Explosion erzeugten heißen Partikel austreten können, die nicht ausreicht, um im Außenraum eine Zündung einer möglicherweise vorhandenen explosionsgefährdeten Atmosphäre zu bewirken. Das austretende Gas darf hierzu auch eine gewisse maximale Temperatur nicht überschreiten. Um dies zu gewährleisten, kann eine Öffnung, beispielsweise ein Ringspalt um ein durch eine Gehäusewandung hindurchgeführtes Element, so dimensioniert werden, dass ein ausreichend geringer Querschnitt (die Austrittsrichtung des Gases verläuft senkrecht zu diesem Querschnitt) gegeben ist. Zudem muss die Austrittsöffnung eine vorgegebene Mindestlänge (in der Austrittsrichtung gesehen) aufweisen, so dass die Austrittstemperatur des Gases einen vorgegebenen Maximalwert nicht überschreitet.

Diese Maßnahmen zur explosionsgeschützten Gestaltung einer Wägevorrichtung erfordern jedoch einen entsprechend hohen konstruktiven Aufwand, der die Baugröße für das Gehäuse der Vorrichtung und dessen Gewicht erhöht und zudem mit entsprechenden Herstellungskosten verbunden ist. Das Vorsehen einer statischen oder dynamischen Schutzgasatmosphäre bzw. das dynamische Zuführen von (nicht explosionsgefährdeter) Umgebungsluft erfordert ebenfalls einen entsprechenden Aufwand für die Schutzgaszuführung und führt zu hohen Betriebskosten.

Es ist bekannt, eine weitgehend kraftnebenschlussfreie elektrische Verbindung zwischen ortsfesten Komponenten innerhalb des Gehäuses einer derartigen Wägevorrichtung und dem elektrischen Antrieb des Förderbandes dadurch zu bewirken, dass entsprechende Leitungen durch das Innere des durch die Gehäusewandung hindurchgeführten Lastaufnehmers geführt sind. Am unteren Endbereich des Lastaufnehmers, der sich in dem Gehäuse der Wägevorrichtung befindet, ist eine elektrische Platine vorgesehen, welche Kontakte aufweist, welche mit den Enden der durch den Lastaufnehmer geführten Leitungen verbunden sind. Im Gehäuse ist eine weitere, ortsfest ausgebildete Platine vorgesehen, welche ebenfalls Kontakte aufweist, welche mit entsprechenden Versorgungsleitungen oder Steuerleitungen verbunden sind, die von den entsprechenden Komponenten innerhalb oder auch außerhalb des Gehäuses kommen. Beide Platinen weisen für jede Leitung jeweils einen Brückenkontakt auf, wobei jeweils zwei einander zugeordnete Brückenkontakte über eine ausreichend flexible, üblicherweise kurz ausgebildete elektrische Brücke in Form eines dünnen elektrischen Leiters verbunden sind. Diese elektrische Leiter sind üblicherweise nicht isoliert oder allenfalls mit einer dünnen Lackschicht isoliert, um eine ausreichende Flexibilität zu gewährleisten. Auf diese Weise wird eine ausreichende Bewegbarkeit des Lastaufnehmers gegenüber einem ortsfesten Bereich eines geeigneten Mesaufnehmers bei gleichzeitig geringem Kraftnebenschluss gewährleistet.

Bei dem Messaufnehmer kann es sich beispielsweise um einen Wägesensor handeln, der nach dem Prinzip der elektrodynamischen Kraftkompensation arbeitet. Hierbei sind zwischen dem Lastaufnehmer und dem Festland nur äußerst geringe bzw. infinitesimal kleine Auslenkungen erforderlich. Dementsprechend können die elektrischen Brücken sehr kurz ausgebildet sein.

Allerdings wäre es in diesem Fall erforderlich, das gesamte Gehäuse der Wägevorrichtung explosionsgeschützt zu gestalten, um den Explosionsschutz gewährleisten zu können. Denn die vorstehend erläuterte Art und Weise der Signalübertragung bzw. Übertragung der elektrischen Antriebsleistung durch den Lastaufnehmer hindurch birgt die Gefahr, dass zwischen den Brückenleitern in einem Fehlerfall, beispielsweise Kurzschluss, Lichtbogen oder Klemmentladungen auftreten können, die eine im Gehäuse befindliche explosionsgefährdete Atmosphäre zünden würden. Dies ist jedoch wiederum mit einem entsprechenden Aufwand verbunden. Ausgehend von diesem Stand der Technik liegt der Erfindung die Aufgabe zugrunde, eine Stromübertragungseinrichtung für eine Kraftmessvorrichtung, insbesondere eine Wägevorrichtung zu schaffen, mit welcher die Kraftmessvorrichtung explosionsgeschützt ausgebildet und somit in einer explosionsgefährdeten Atmosphäre verwendet werden kann und welche einfach und kostengünstig realisierbar ist. Weiterhin liegt der Erfindung die Aufgabe zugrunde, eine Kraftmessvorrichtung, insbesondere Wägevorrichtung, mit einer derartigen Stromübertragungseinrichtung zu schaffen.

Als Wägevorrichtung wird im Folgenden jegliche Vorrichtung zur Erfassung einer Gewichtskraft bezeichnet.

Die Erfindung löst diese Aufgabe mit den Merkmalen der selbstständigen Ansprüche 1 bzw. 15.

In der Patentschrift JP3771994B2 wird eine Kraftmessvorrichtung offenbart, welche eine Stromübertragungseinrichtung mit einem Verbindungselement 26 aufweist, wobei dieses Verbindungselement nicht so ausgebildet ist, dass es im Betriebszustand die Gehäusewandung berührungslos und durchzündungssicher durchgreift.

Die Erfindung geht von der Erkenntnis aus, dass der Explosionsschutz für eine Kraftmessvorrichtung, welche ein Gehäuse aufweist, dadurch gewährleistet werden kann, dass nicht das gesamte Gehäuse den Anforderungen des Explosionsschutz genügen muss, sondern lediglich eine erfindungsgemäße Stromübertragungseinrichtung in dem Gehäuse der Kraftmessvorrichtung angeordnet oder außen mit dem Gehäuse der Kraftmessvorrichtung verbunden wird. Eine solche Stromübertragungseinrichtung dient dabei für das leitungsgebundene Übertragen von elektrischer Energie, insbesondere zur Energieversorgung beliebiger Komponenten (z.B. eines elektrischen Antriebs) und/oder zur leitungsgebundenen Kommunikation (d.h. zur Übertragung von elektrischen Signalen).

Dabei weist die erfindungsgemäße Stromübertragungseinrichtung ein druckfestes Gehäuse mit einer Gehäusewandung auf, wobei das Gehäuse mit dem Basisbereich der Kraftmessvorrichtung mechanisch fest verbindbar ist. Bei dem Basisbereich der Kraftmessvorrichtung kann es sich beispielsweise um das Gehäuse der Kraftmessvorrichtung handeln. Weiterhin weist die Stromübertragungseinrichtung ein Verbindungselement auf, welches an einem äußeren Endbereich, welcher aus dem Gehäuse herausragt, in einem Betriebszustand mit dem beweglichen Bereich der Kraftmessvorrichtung mechanisch fest verbindbar ist. Hierbei kann es sich beispielsweise um einen aus dem Gehäuse der Kraftmessvorrichtung herausragenden Bereich eines Lastaufnehmers oder eine damit verbundene Komponente, beispielsweise eine außerhalb des Gehäuses befindliche Lastplatte handeln. Im Fall des vorstehend erläuterten Beispiels einer Wägevorrichtung mit einem Gehäuse und einem außerhalb des Gehäuses befindlichen Förderband, welches als Vorlast auf einen im Gehäuse angeordneten Kraftaufnehmer (beispielsweise eine Wägezelle) wirkt, kann auf einer derartigen Lastplatte das Förderband angeordnet sein.

Das aus dem Gehäuse der Stromübertragungseinrichtung herausragende Verbindungselement ist so ausgebildet, dass es im Betriebszustand die Gehäusewandung berührungslos und durchzündungssicher durchgreift. Der Begriff "durchzündungssicher" bedeutet dabei, dass die Durchführung des Verbindungselements durch die Wandung des Gehäuses so ausgeführt ist, dass ein Explosionsschutz (gegebenenfalls unter Berücksichtigung entsprechender Vorschriften und gegebenenfalls auch verschiedener Klassen des Explosionsschutzes) gewährleistet ist.

Das Verbindungselement der Stromübertragungseinrichtung ist dabei als beweglicher Kabeldurchtritt ausgebildet ist, wobei ein erstes Kabel mit wenigstens einer elektrischen Leitung am äußeren Endbereich (d.h. außerhalb des Gehäuses der Stromübertragungseinrichtung) in das Verbindungselement geführt ist und dieses durchgreift. An einem inneren Endbereich des Verbindungselements, welches in das Gehäuse ragt, ist das Kabel in das Gehäuse geführt. Das Kabel ist somit in dem Verbindungselement in das Gehäuse geführt, wobei die Durchführung des Kabels durch das Verbindungselement zumindest durchzündungssicher ausgestaltet sein muss. Beispielsweise kann das Kabel durch eine Ausnehmung in dem Verbindungselement geführt und in diese Ausnehmung eingeklebt sein. Anstelle des Einklebens kann das Kabel auch mit geeigneten konstruktiven Maßnahmen in dieser Ausnehmung des Verbindungselements geklemmt sein. Weiterhin ist es möglich, einzelne Adern des Kabels (im Folgenden als Leitungen bezeichnet) in einem gewissen axialen Bereich von einem Mantel des Kabels zu befreien und in einer Ausnehmung des Verbindungselements zu verkleben. Auf diese Weise kann erreicht werden, dass ein innerhalb des Gehäuses entstehender Überdruck (im Fall einer Explosion) nicht den Kabelmantel außerhalb des Gehäuses aufblasen und gegebenenfalls zum explosionsartigen Platzen bringen kann, wobei in diesem Fall sogar die Gefahr einer Durchzündung bestehen kann.

Es ist selbstverständlich ebenfalls möglich, anstelle eines einzigen Kabels mehrere Kabel mit jeweils einer einzigen Leitung bzw. mehrere (dann als Kabel bezeichnete) Leitungen durch das Verbindungselement in das Gehäuse der Stromübertragungseinrichtung zu führen.

Die Durchführung des wenigstens einen Kabels durch das Verbindungselement muss dabei auch druckfest sein, um zu vermeiden, dass für den Fall, dass im Gehäuse durch eine Explosion ein Überdruck erzeugt wird, nicht die Ausnehmung für das Kabel in dem Verbindungselement aufgebrochen wird. In diesem Fall könnte wiederum eine Durchzündung erfolgen bzw. Teile des Kabels oder Komponenten für die Durchführung des Kabels gelöst und weggeschleudert werden.

Weiterhin weist das Gehäuse der Stromübertragungseinrichtung eine gehäusefeste Kabeldurchführung auf, welche zur druckfesten und durchzündungsdichten Durchführung eines zweiten Kabels mit wenigstens einer elektrischen Leitung durch die Gehäusewandung ausgebildet ist. Auch hier können wiederum anstelle eines einzigen Kabels mehrere Kabel mit jeweils einer einzigen Leitung verwendet werden. Für die Durchführung durch das Gehäuse gelten die vorstehenden Bemerkungen für die Durchführung durch das Verbindungselement analog.

An dem zweiten Endbereich des Verbindungselements ist eine mit diesem mechanisch fest verbundene bewegliche Kontakteinrichtung und in dem Gehäuse ist eine mit dem Gehäuse mechanisch fest verbundene gehäusefeste Kontakteinrichtung vorgesehen, wobei zwischen der beweglichen und der gehäusefesten Kontakteinrichtung wenigstens eine flexible elektrische Kontaktbrücke ausgebildet ist.

Die wenigstens eine Leitung des ersten Kabels ist mechanisch und elektrisch mit der beweglichen Kontakteinrichtung und die wenigstens eine Leitung des zweiten Kabels ist mechanisch und elektrisch mit der ortsfesten Kontakteinrichtung derart verbunden, dass über die wenigstens eine Kontaktbrücke ein elektrischer und mechanischer Kontakt zwischen der wenigstens einen Leitung des ersten Kabels und der wenigstens einen Leitung des zweiten Kabels ausgebildet ist.

Diese wenigstens eine flexible elektrische Kontaktbrücke ist so ausgeführt, dass der hierdurch erzeugte Kraftnebenschluss, der durch das erste und zweite Kabel zwischen dem Basisbereich und dem beweglichen Bereich einer Kraftmessvorrichtung mit einer derartigen Stromübertragungseinrichtung bewirkt wird, kleiner ist als ein vorbestimmter Schwellenwert. Dieser Schwellenwert kann selbstverständlich in Abhängigkeit von der geforderten Messgenauigkeit der Kraftmessvorrichtung gewählt werden. Die elektrische Kontaktbrücke kann beispielsweise als dünnes flexibles Goldband oder aus einer Vielzahl von einzelnen feinen Drähten ausgebildet sein.

Nach einer Ausführungsform der Erfindung ist die Stromübertragungseinrichtung derart ausgebildet, dass das Verbindungselement als im Wesentlichen zylindrisches Element ausgebildet ist und dass die Gehäusewandung in einem Bereich einer Durchgriffsöffnung für das Verbindungselement eine vorbestimmte Dicke und die Durchgriffsöffnung einen vorbestimmten Querschnitt aufweist, die so gewählt sind, dass im Betriebszustand ein durchzündungssicherer Ringspalt zwischen dem Verbindungselement und einer Innenwandung der Durchgriffsöffnung ausgebildet ist.

Ein durchzündungssicherer Ringspalt setzt dabei voraus, dass sein Querschnitt (in Richtung einer Längsachse des Verbindungselements gesehen) und seine Länge so bestimmt sind, dass selbst bei einer Explosion im Inneren des Gehäuses sichergestellt ist, dass keine Durchzündung in den das Gehäuse umgebenden Raum erfolgt, wenn auch in diesem eine explosionsgefährdete Atmosphäre vorliegt. Dabei kann sich der Querschnitt des Ringspalts entlang der Längsachse des Verbindungselements auch ändern.

In einer weiteren Ausführungsform kann Gehäuse einen lösbar mit dem Gehäuse verbundenen Gehäusedeckel aufweisen, der so ausgebildet ist, dass der Gehäusedeckel mit einem sich in das Gehäuseinnere erstreckenden Eingriffsbereich mit wenigstens einer Anschlagschulter am Außenumfang des Verbindungselements derart zusammenwirkt, dass ein Begrenzungsanschlag hinsichtlich der Bewegung des Verbindungselement bewirkt ist, zumindest gegenüber einer Bewegung des Verbindungselements in einer Bewegungsrichtung aus dem Gehäuse heraus.

Hierzu kann der Gehäusedeckel einen sich in das Gehäuse erstreckenden, vorzugsweise umlaufenden Flansch aufweisen, welcher den Eingriffsbereich bildet.

Die wenigstens eine Anschlagschulter kann durch eine Ausnehmung, beispielsweise eine Nut, im Außenumfang des Verbindungselements gebildet sein.

Durch einen solchen Begrenzungsanschlag wird verhindert, dass im Fall einer Explosion im Gehäuse Inneren der Stromübertragungseinrichtung das Verbindungselement geschossartig aus seiner Aufnahmeöffnung herausgeschleudert wird.

Zusätzlich zu der diese Bewegung aus dem Gehäuse heraus begrenzenden Anschlag Schulter kann eine weitere Anschlagschulter vorgesehen sein, die verhindert, dass das Verbindungselement zu weit in das Gehäuse hinein bewegt wird. Auf diese Weise kann insbesondere eine Zerstörung der wenigstens einen Kontaktbrücke oder gar der beweglichen oder gehäusefesten Kontakteinrichtung vermieden werden.

Beispielsweise kann eine Nut im Außenumfang des Verbindungselements beide Anschlagschultern gleichzeitig realisieren.

Für das einfachere Montieren der Stromübertragungseinrichtung kann ein ringförmiges Montageelement vorgesehen sein, welches das Verbindungselement umgreift und auf diesem in der Richtung einer Längsachse des Verbindungselements zwischen einer Justierposition und einer Betriebsposition verschiebbar ausgebildet ist. Weiterhin kann zu diesem Zweck die Durchgriffsöffnung für das Verbindungselement an einem, bezogen auf das Gehäuse, nach außen gerichteten Bereich als Eingriffsbereich für das ringförmige Montageelement ausgebildet sein. Das Montageelement und der Eingriffsbereich können dabei so ausgebildet sein und bei in der Justierposition befindlichem Montageelement derart zusammenwirken, dass das Verbindungselement so im Gehäuse positioniert ist, dass, mit Ausnahme des Eingriffsbereichs, der durchzündungssichere Ringspalt zwischen dem Verbindungselement und einer Innenwandung der Durchgriffsöffnung ausgebildet ist. In dieser Justierposition können das Verbindungselement mit dem beweglichen Bereich einer Kraftmessvorrichtung und das Gehäuse der Stromübertragungseinrichtung mit dem Basisbereich der Kraftmessvorrichtung derart mechanisch verbunden werden, dass nach einem Außer-Eingriff-Bringen des Montageelements und des Eingriffsbereichs eine (im Wesentlichen ausschließlich axiale) Bewegung des Verbindungselements in der Durchgriffsöffnung ermöglicht ist. In dieser Betriebsposition gibt also das Montageelement das Verbindungselement frei, d.h. das Verbindungselement durchgreift die Durchgriffsöffnung berührungslos.

Somit kann hierdurch eine sehr einfache Montage der Stromübertragungseinrichtung an oder in einer Kraftmessvorrichtung erfolgen, wobei die hochgenaue Justierung des Verbindungselements in Bezug auf das Gehäuse der Stromübertragungseinrichtung gewährleistet werden kann.

Nach einer Ausführungsform der Erfindung kann das Montageelement in der Betriebsposition und/oder der Justierposition am Verbindungselement arretierbar ausgebildet sein. Durch die Arretierung in der Betriebsposition kann das Montageelement im Betriebszustand an dem Verbindungselement verbleiben, ohne dass es die freie Beweglichkeit des Verbindungselements in der Durchgriffsöffnung stören kann.

Das Montageelement kann auch derart ausgebildet sein, dass es in der Betriebsposition eine Labyrinthdichtung mit bildet, d.h. Teil einer Labyrinthdichtung wird, welche den Ringspalt insbesondere gegen das Eindringen von Wasser, Staub oder anderen Partikeln schützt.

Nach einer weiteren Ausführungsform der Erfindung wird das Montageelement von einem Ringelement umgriffen, welches von einer Montageposition in eine Arbeitsposition bewegbar ist, wobei das Ringelement in der Arbeitsposition gegenüber dem Montageelement in Richtung auf das Gehäuse versetzt positioniert ist und mit dem Montageelement und dem Gehäuse die Labyrinthdichtung bildet.

Das Ringelement kann auch in der Arbeitsposition gegenüber dem Montageelement und damit auch gegenüber dem Verbindungselement arretiert werden. Diese Arbeitsposition kann auch so gewählt sein, dass die untere Stirnseite des Ringelements, also die der Gehäuseaußenseite zugewandte Stirnseite des Ringelements, einen Anschlag für die Bewegung des Verbindungselements in das Gehäuse hinein bildet.

Weiterhin kann das Gehäuse einen die Durchgriffsöffnung umgebenden vorspringenden Flansch zur Mitbildung der Labyrinthdichtung aufweisen, welcher vorzugsweise von dem Ringelement umgriffen ist, wobei zwischen einer Innenwandung des Ringelements und einer Außenwandung des Flansches ein Ringspalt gebildet ist. Auch dieser Ringspalt kann einen Teil der Labyrinthdichtung bilden.

Nach einer weiteren Ausführungsform können die bewegliche Kontakteinrichtung und die gehäusefeste Kontakteinrichtung jeweils als Leiterplatte ausgebildet sein. Die wenigstens eine flexible elektrische Kontaktbrücke zwischen den betreffenden Kontakten der Leiterplatten können als flexibler elektrischer Leiter, insbesondere als metallischer Leiter, beispielsweise Goldband, ausgebildet sein.

Um die Montage der erfindungsgemäßen Stromübertragungseinrichtung zu vereinfachen, können die die bewegliche Kontakteinrichtung und die gehäusefeste Kontakteinrichtung bildenden Leiterplatten in einem Montagezustand miteinander mechanisch verbunden sein. So können die beiden verbundenen Leiterplatten beispielsweise nach dem Einführen des Verbindungselements in das Gehäuse mit dem Gehäuse bzw. mit dem inneren Ende des Verbindungselements verbunden werden. Das Verbindungselement kann sich dabei in einer Position befinden, in dem das Montageelement in seiner Justierposition auf dem Verbindungselement in den Eingangsbereich des Gehäuses eingreift und dadurch das Verbindungselement gegenüber dem Gehäuse so positioniert, dass das Verbindungselement das Gehäuse berührungslos durchgreift. Anschließend kann die Verbindung zwischen den beiden Leiterplatten aufgehoben werden, ohne dass die Gefahr besteht, dass die empfindliche wenigstens eine Kontaktbrücke zerstört wird.

Die Leiterplatten können dabei insbesondere über Trennstellen verbunden sein, wodurch ein einstückiges Herstellen der Leiterplatten ermöglicht wird. Die Trennstellen sind dabei durch einen entsprechend schmalen bzw. dünnen gewählten Teil der Leiterplatten definiert.

Damit ermöglicht es die erfindungsgemäße Stromübertragungseinrichtung, eine Kraftmessvorrichtung für den Einsatz in einer explosionsgefährdeten Atmosphäre zu schaffen, die einen einfachen und kostengünstigen Aufbau aufweist und bei welcher eine elektrische Leitungsverbindung zwischen den beiden relativ zueinander beweglichen Bereichen der Kraftmessvorrichtung ausgebildet ist, die lediglich einen äußerst geringen Kraftnebenschluss erzeugt. Die erfindungsgemäße Stromübertragungseinrichtung ist dabei modular ausgebildet und kann auch zu einer relativ einfachen Nachrüstung oder Umrüstung einer bereits bestehenden Kraftmessvorrichtung eingesetzt werden. Zudem ist durch die modulare Ausbildung die Verwendung für unterschiedlichste Typen von Kraftmessvorrichtungen möglich. Die erfindungsgemäße Stromübertragungseinrichtung kann dabei weitere nicht eigensicher ausgebildeten elektrischen Komponenten aufnehmen, die für die Kraftmessvorrichtung erforderlich sind und ohne die erfindungsgemäße Stromübertragungseinrichtung im Gehäuse der Kraftmessvorrichtung angeordnet werden müssten (wobei in diesem Fall ohne die Verwendung der erfindungsgemäßen Stromübertragungseinrichtung das gesamte Gehäuse der Kraftmessvorrichtung explosionsgeschützt ausgebildet werden müsste).

Weitere Ausgestaltungen der Erfindung ergeben sich aus den Unteransprüchen. Die Erfindung wird nachstehend anhand eines in der Zeichnung dargestellten Ausführungsbeispiels näher erläutert, ohne dass dieses Ausführungsbeispiel als eine Beschränkung der vorstehend erläuterten grundlegenden Kernideen der Erfindung aufzufassen sind. In der Zeichnung zeigen
- Fig. 1: eine perspektivische Darstellung einer Wägevorrichtung mit einem Gehäuse, einer außerhalb des Gehäuses angeordneten Lastplatte und einem im Gehäuse angeordneten Kraftaufnehmer, dessen Lasteinleitung mit der Lastplatte mechanisch gekoppelt ist;
- Fig. 2: eine perspektivische Darstellung der Wägevorrichtung gemäß Fig.1 ohne die seitliche Gehäusewandung mit einer erfindungsgemäßen Stromübertragungseinrichtung;
- Fig. 3: eine teilweise geschnittene Seitenansicht der Stromübertragungseinrichtung gemäß Fig. 2;
- Fig. 4: eine perspektivische Darstellung des Verbindungselements der Stromübertragungseinrichtung gemäß Fig. 3 mit einer daran befestigten beweglichen Kontakteinrichtung; und
- Fig. 5: eine perspektivische Darstellung des seitlichen Gehäusedeckels des Gehäuses der Stromübertragungseinrichtung gemäß Fig. 3.

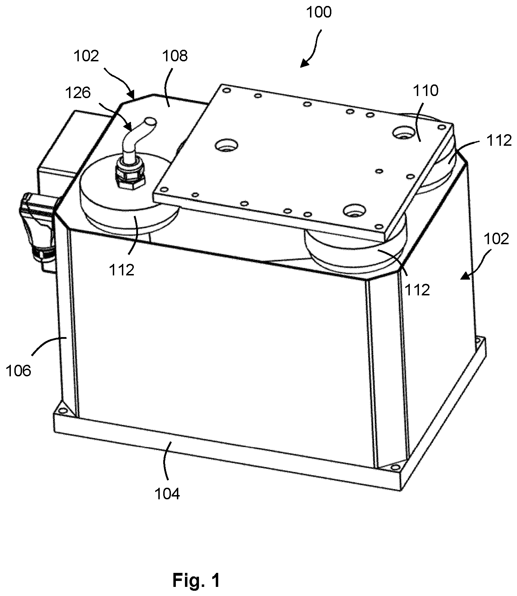

Fig. 1 zeigt in perspektivischer Ansicht eine Kraftmessvorrichtung in Form einer Wägevorrichtung 100 mit einem Gehäuse 102, welches eine Bodenplatte 104, eine umlaufende Seitenwandung 106 und eine obere Gehäusewandung 108 aufweist. Eine Lastplatte 110 ist mechanisch mit drei Tragelementen verbunden, die durch die obere Gehäusewandung 108 geführt sind, wobei die Tragelemente die obere Gehäusewandung 108 berührungslos durchgreifen. Die entsprechenden Durchbrüche in der oberen Gehäusewandung 108 bzw. die Ringspalte, die durch die Innenwandungen der Durchbrüche und die Außenwandungen der diese durchgreifenden Tragelemente gebildet sind, sind jeweils mittels einer Labyrinthdichtung 112 "abgedichtet", wobei Abdichtung in diesem Fall bedeutet, dass ein ringförmiger und im Querschnitt mäanderartig verlaufender Ringspalt, der durch jede Labyrinthdichtung ausgebildet ist, das Eindringen von Wasser, Staub und anderen Partikeln verhindert. Die Durchführung der Tragelemente bleibt dabei berührungslos und erzeugt keinerlei Kraftnebenschluss.

An der in Fig. 1 linken Seite der Gehäusewandung 106 ist eine Buchseneinrichtung 114 vorgesehen, über welche die Wägevorrichtung 100 mit elektrischer Energie versorgt werden kann und über welche eine unidirektionale oder bidirektionale Kommunikationsverbindung zwischen der Wägevorrichtung 101 und einer übergeordneten Einheit, beispielsweise einer externen Steuereinheit (nicht dargestellt), hergestellt werden kann.

Das Gehäuse 102 der Wägevorrichtung 100 ist nicht explosionsgeschützt ausgeführt. Dennoch soll die Wägevorrichtung 100, insgesamt gesehen, so ausgebildet sein, dass diese unter Berücksichtigung der entsprechenden Vorschriften in einer explosionsgefährdeten Atmosphäre betrieben werden kann.

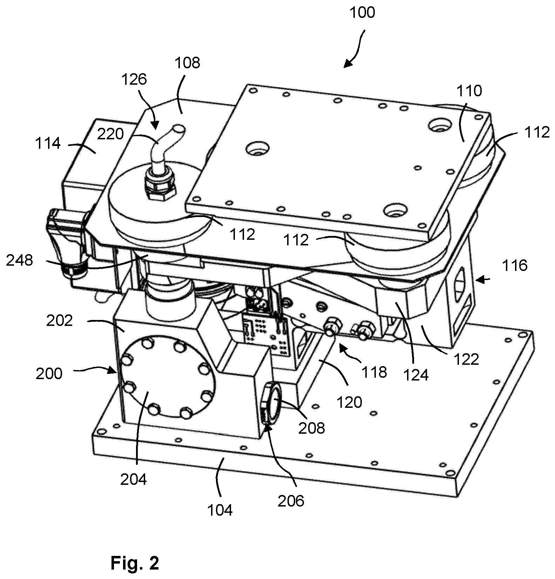

Fig. 2 zeigt die Wägevorrichtung 100 aus Fig. 1 ohne die umlaufende Seitenwandung des Gehäuses 102. Wie aus dieser Figur ersichtlich, ist im Inneren dieses Gehäuses 102 ein Kraftaufnehmer 116 vorgesehen, der im dargestellten Ausführungsbeispiel nach dem Prinzip der elektromagnetischen Kraftkompensation arbeitet. der Kraftaufnehmer 116 weist einen Grundkörper 118 auf, der einerseits ein Basisteil 120 und andererseits einen über eine Hebelmechanik mit dem Basisteil 120 verbundenen Lasteinleitungsbereich 122 umfasst. Der Lasteinleitungsrichtungsbereich 122 weist an seiner Oberseite eine Trägerplatte 124 auf, welche ihrerseits wiederum mit den vorstehend beschriebenen Tragelementen verbunden ist, die durch die obere Gehäusewandung 108 berührungslos hindurchgeführt sind. Die Trägerplatte 124 kann beispielsweise mit dem Lasteinleitungsbereich 122 verschraubt sein.

Somit kann die Kraftaufnehmer 116 die Gewichtskraft erfassen, welche auf die Lastplatte 110 wirkt. Die Lastplatte 110 kann mit einer weiteren Vorrichtung verbunden und belastet werden, beispielsweise einer nicht dargestellten Fördereinrichtung, beispielsweise einem elektrisch angetriebenen Förderband. Der elektrische Antrieb des Förderbandes muss dabei mit elektrischer Energie versorgt werden. In einem solchen Fall besteht die Notwendigkeit, eine Kommunikationsverbindung zwischen der Wägevorrichtung 100 bzw. einer mit der Wägevorrichtung über die Buchseneinrichtung 114 verbundenen externen Einheit herzustellen. Hierzu wird üblicherweise eine Kabelverbindung zwischen der Wägevorrichtung und der damit mechanisch fest verbundenen weiteren Vorrichtung verwendet. Der Begriff "Kabelverbindung" wird hier im Sinne einer beliebig ausgebildeten leitungsgebundenen Verbindung für die Übertragung von elektrischen Strömen (unabhängig davon, welchen Zweck die Ströme dienen) verwendet. Die Fig. 1 und 2 zeigen ein Kabel 126 einer derartigen Kabelverbindung teilweise, wobei lediglich der durch die obere Gehäusewandung 108 des Gehäuses 102 der Wägevorrichtung 100 hindurchgeführte Teil des Kabels 126 dargestellt ist.

Fig. 2 zeigt eine im Innenraum des Gehäuses 102 angeordnete Stromübertragungseinrichtung 200, welche ein Gehäuse 202 aufweist. Das Gehäuse 202 weist einen an der vorderen Seitenwandung vorgesehenen Verschlussdeckel 204 auf, der mit einer Mehrzahl von Schrauben mit dem Gehäuse 202 verbunden ist. An seiner rechten Seitenwandung weist das Gehäuse 202 eine gehäusefeste Kabeldurchführung 206 auf, wobei in Fig. 2 lediglich ein mit dem Gehäuse verbundenes Verbindungsteil 208 ohne ein durch das Verbindungsteil 208 hindurchgeführtes und in diesem gehaltenes Kabel dargestellt ist. Dieses in das Gehäuse 202 der Stromübertragungseinrichtung 200 geführte Kabel kann beispielsweise mit der Buchseneinrichtung 114 verbunden sein, so dass durch einen Anschluss der Buchseneinrichtung 114 eine entsprechende Leitungsverbindung von einer externen Einheit (nicht dargestellt) zu der Stromübertragungseinrichtung 200 und von dieser zu der mit der Lastplatte 110 verbundenen Einheit, beispielsweise einem Förderband, hergestellt werden kann.

Die Stromübertragungseinrichtung 200 ermöglicht es, das an seiner Seitenwandung über die gehäusefeste Kabeldurchführung 206 in das Gehäuse 202 geführte Kabel (nicht dargestellt) mit dem Kabel 126 so zu verbinden, dass ein nur sehr geringer Kraftnebenschluss in Bezug auf die relativ zueinander beweglichen Teile des Kraftaufnehmers 116 (und damit auch der Wägevorrichtung 100) verursacht wird.

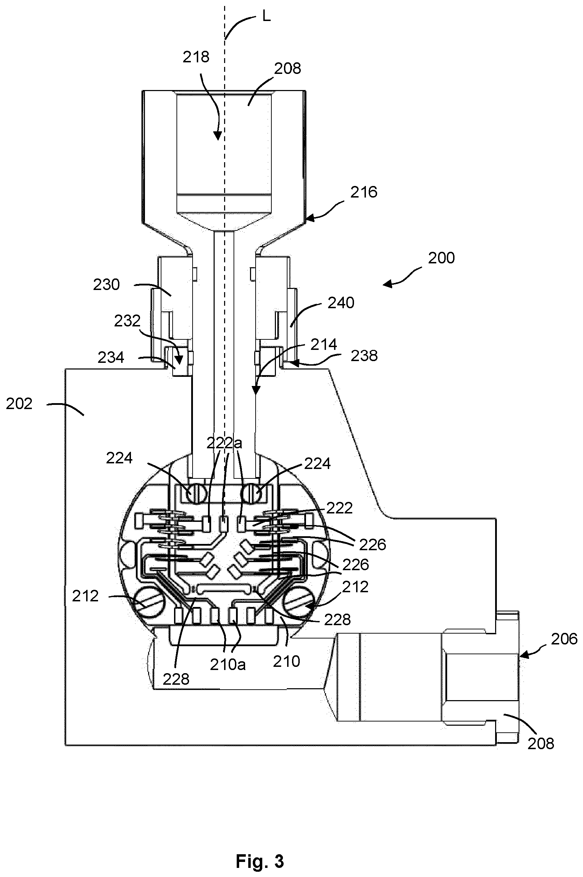

Fig. 3 zeigt eine Schnittansicht der Stromübertragungseinrichtung 200 in einer (bezogen auf die Darstellung in Fig. 2) vertikalen Mittelebene. Zunächst ist aus dieser Figur erkennbar, dass das Gehäuse 202 sehr dicke Wandungen aufweist, welche die Druckfestigkeit des Gehäuses bewirken. Das Verbindungsteil 208 der gehäusefesten Kabeldurchführung 206 ist in die rechte Seitenwandung des Gehäuses eingeschraubt, wobei selbstverständlich auch diese Schraubverbindung druckfest ausgebildet sein muss, um zu vermeiden, dass im Fall einer Explosion innerhalb des Gehäuses 202 das Verbindungsteil 208 geschossartig von dem Gehäuse 202 weggeschleudert wird. Das nicht dargestellte Kabel, welches durch das Verbindungsteil 208 hindurchgeführt ist, muss zumindest durchzündungsdicht mit dem Verbindungsteil 208 verbunden sein. Wie bereits vorstehend erläutert, kann dies durch einen nicht näher gezeigten Klemmmechanismus oder durch Einkleben bzw. Vergießen erfolgen. Da das Kabel üblicherweise mehrere darin zusammengefasste Leitungen aufweist, kann zur Verbesserung der Verbindung zwischen Kabel und Verbindungsteil 208 auch der Mantel in einem axial inneren Bereich des Verbindungsteils 208 entfernt sein, so dass die einzelnen Leitungen jeweils für sich genommen mit dem Verbindungsteil 208 verbunden werden können, beispielsweise durch Verkleben oder Vergießen.

Im Innenraum des Gehäuses 202 ist weiterhin eine gehäusefeste Kontakteinrichtung 210 angeordnet, die beispielsweise mittels zweier Schrauben 212 (in Fig. 2 ist nur die linke Schraube 212 dargestellt) mit dem Gehäuse verschraubt sein kann. Die gehäusefeste Kontakteinrichtung 210 weist Anschlusskontakte 210a auf, welche mit den Enden der im Kabel enthaltenen Leitungen verbunden werden können. Dies kann durch Verlöten oder beliebige Klemmmechanismen erfolgen.

In der oberen Wandung des Gehäuses 202 ist eine Durchgriffsöffnung 214 ausgebildet, durch welche sich ein Verbindungselement 216 erstreckt. Das Verbindungselement 216 ist zumindest in einem Betriebszustand, in welchem das Verbindungselement 216 mit dem beweglichen Teil der Wägevorrichtung 100, insbesondere der Trägerplatte 124 und damit auch der Lastplatte 110, verbunden ist, berührungslos und durchzündungssicher durch die Durchgriffsöffnung 214 hindurchgeführt. Hierzu ist der Querschnitt der Durchgriffsöffnung 214 in Bezug auf den Querschnitt des Verbindungselements 216 (im Bereich der Durchgriffsöffnung 214) so dimensioniert, dass in dem Betriebszustand ein durchzündungssicherer Ringspalt zwischen der Innenwandung der Durchgriffsöffnung 214 und der Außenwandung bzw. dem Außenumfang des Verbindungselements 216 besteht. Der Betriebszustand setzt damit selbstverständlich eine ausreichend exakte Positionierung des Verbindungselements 216 gegenüber dem Gehäuse 202 und damit der Durchgriffsöffnung 214 voraus.

Wie aus Fig. 3 ersichtlich, kann das Verbindungselement 216 zumindest in dem Bereich, mit welchem das Verbindungselement 216 die Durchgriffsöffnung 214 durchgreift, zylindrisch, insbesondere kreiszylindrisch ausgebildet sein. Hierdurch ergibt sich ein einfacher konstruktiver Aufbau, da die Durchgriffsöffnung 214 als Bohrung ausgeführt werden kann.

In seinem oberen Bereich kann das Verbindungselement 216 einen Aufnahmebereich für ein weiteres Verbindungsteil 208 aufweisen, welches denselben konstruktiven Aufbau aufweisen kann, wie das Verbindungsteil 208 der gehäusefesten Kontakteinrichtung 210. Hierdurch ergibt sich ein einfacher konstruktiver Aufbau. Selbstverständlich kann dieser Bereich des Verbindungselements 216 jedoch auch in beliebiger anderer geeigneter Art und Weise ausgebildet sein. Auch in diesem Fall ist das Verbindungsteil 208 druckfest in dem Verbindungselement 216 gehalten.

Das Verbindungselement 216 ist insgesamt als Kabeldurchtritt ausgebildet, und weist zu diesem Zweck eine das Verbindungselement 216 in seiner gesamten Länge durchgreifende Ausnehmung 218 auf, wobei der obere Bereich der Ausnehmung 218 zur Aufnahme des Verbindungsteils 208 mit einem Innengewinde ausgebildet ist, welches mit einem Außengewinde des Verbindungsteils 208 zusammenwirkt.

Das Verbindungsteil 208, welches in den oberen Bereich des Verbindungselements 216 eingeschraubt ist, nimmt ein Kabel 220 der Kabelverbindung 126 (Fig. 2) auf und führt dieses zumindest durchzündungssicher in die Ausnehmung 218. Selbstverständlich kann auch das Kabel 220 mehrere Leitungen aufweisen, die auch, wie vorstehend beschrieben, einzelnen in dem Verbindungsteil 208 fixiert sein können.

Das Kabel 220 bzw. die betreffenden Leitungen sind durch die Ausnehmung 218 geführt und ragen mit ihren innenseitigen Enden in den Innenraum des Gehäuses 202. Auch der innenseitige Bereich des Verbindungselements 216 ragt in den Innenraum des Gehäuses 202, so dass, wie aus Fig. 3 ersichtlich, an dem innenseitigen Ende des Verbindungsteils 216 eine bewegliche Kontakteinrichtung 222 befestigt sein kann. Auch diese Befestigung kann wiederum mittels Schrauben 224 erfolgen.

Die bewegliche Kontakteinrichtung 222 weist ebenfalls Anschlusskontakte 222a auf, welche mit den Enden der wenigstens einen in dem Kabel 220 enthaltenen Leitungen (nicht dargestellt) verbunden sind. Die Verbindung kann wiederum beispielsweise durch Löten oder geeignete Klemmmechanismen erfolgen. Die bewegliche Kontakteinrichtung 222 ist somit zusammen mit dem Verbindungselement 216 beweglich, wobei Relativbewegungen gegenüber dem Gehäuse 202 ausgeführt werden können. Der Bewegungsweg ist dabei abhängig von der Ausbildung des Kraftaufnehmers 116. Ist dieser als Kraftaufnehmer nach dem Prinzip der elektromechanischen Kraftkompensation ausgebildet, so müssen allenfalls infinitesimal kleine Bewegungswege ausgeführt werden, da dieses Messprinzip darauf basiert, den Lastaufnehmer möglichst in einer vordefinierten Position zu halten, wobei der hierzu erforderliche Strom ein Maß für die zu erfassende Gewichtskraft darstellt.

Die Anschlusskontakte 210a der gehäusefesten Kontakteinrichtung 210 und die Anschlusskontakte 222a der beweglichen Kontakteinrichtung 222 sind über Kontaktbrücken 226 verbunden, wobei eine Kontaktbrücke 226 jeweils einen Anschlusskontakt 210a mit einem zugeordneten Anschlusskontakt 222a verbindet. Entsprechend wird eine Leitung des mittels der Kabeldurchführung 206 in das Gehäuse 202 geführten Kabels mit einer zugeordneten Leitung des mittels des Verbindungselements 216 in das Gehäuse 202 geführten Kabels verbunden. Die Kontaktbrücken 226 bestehen zur möglichst weitgehenden Reduzierung eines Kraftnebenschlusses aus sehr flexiblen elektrischen Leitern, beispielsweise Golddrähten oder Goldbändern. Diese können mit den Anschlusskontakten 222a bzw. 210a durch Bonden, Löten oder dergleichen verbunden sein. Soll eine Kontaktbrücke 226 zur Führung höherer Stromstärken ausgebildet sein, so können auch jeweils zwei oder mehrere Drähte mit den betreffenden Anschlusskontakten verbunden sein.

Die Kontakteinrichtungen 210 und 222 können, wie in Fig. 3 dargestellt, als Leiterplatten ausgebildet sein, wobei die Anschlusskontakte 210a bzw. 222a in Form von entsprechenden Leiterbahnen bzw. Leiterbahnbereichen ausgebildet sein können. Anschlusskontakte 210a und 222a können auch jeweils Anfangsbereiche und Endbereiche aufweisen, die über einen oder mehrere Leiterbahnzüge verbunden sein können. Damit können die Bereiche, in denen die Enden der Kontaktbrücken mit den Anschlusskontakten verbunden werden, an anderer Stelle liegen als die Bereiche der Anschlusskontakte, die mit den entsprechenden Enden der in den Kabeln geführten Leitungen verbunden werden.

Bei der in Fig.3 dargestellten Ausführungsform sind die Leiterplatten der Kontakteinrichtungen 210 und 222 noch über Verbindungsstege 228 miteinander verbunden. Denn die Leiterplatten der Kontakteinrichtungen wurden in diesem Ausführungsbeispiel als eine einzige Leiterplatte hergestellt, die einen ersten Bereich aufweist, der die Kontakteinrichtung 210 bildet und einen zweiten Bereich, der die Kontakteinrichtung 222 bildet. Hierdurch wird die Montage der Stromübertragungseinrichtung 200 vereinfacht. Beispielsweise kann zunächst die noch einstückige Platine, welche die Kontakteinrichtungen 210 und 222 bildet, zunächst in das Gehäuse 202 eingesetzt und mit den Schrauben 212 befestigt werden. Anschließend können die Enden der Leitungen des Kabels, welches mittels der Kabeldurchführung 206 in das Gehäuse geführt ist, mit den Anschlusskontakten 210a verbunden werden. Anschließend kann das Verbindungselement 216 in die Durchgriffsöffnung 214 eingeführt werden, bis das innenseitige Ende des Verbindungselements 216 so gegenüber der Platine positioniert ist, dass diese mit den Schrauben 224 mit dem Verbindungselement 216 verbunden werden kann. In diesem Zustand muss das Kabel 220 noch nicht zusammen mit dem Verbindungsteil 208 in den oberen Bereich des Verbindungselements 216 eingeschraubt sein. Dies kann jedoch auch der Fall sein.

In diesem Montagezustand des Verbindungselements 216 ist allerdings noch nicht gewährleistet, dass das Verbindungselement 216 berührungslos durch die Durchgriffsöffnung 214 ragt, da der betreffende Ringspalt extrem geringe Abmessungen aufweist und alleine die Befestigung des Verbindungselements 216 über die die Kontakteinrichtungen 210 und 222 bildende Platine nicht zu einer derart exakten Positionierung genügt.

Zum Zweck einer derart exakten Positionierung ist auf dem Verbindungselement 216 ein ringartig ausgebildetes Montageelement 230 vorgesehen, welches das Verbindungselement umgreift und axial (in Richtung einer Längsachse L des Verbindungselements) auf dem Verbindungselement 216 verschiebbar ist. Das Montageelement 230 umgreift das Verbindungselement 216 spielfrei aber axial verschiebbar, so dass bei einer Fixierung des Montageelements 230 auch das darin geführte Verbindungselement 216 exakt in der betreffenden Position positioniert ist.

Wie aus Fig. 3 ersichtlich, weist das Gehäuse 202 im Bereich der Durchgriffsöffnung 214 an der oberen Gehäusewandung einen Eingriffsbereich 232 auf, der so ausgebildet ist, dass er mit einem unteren Bereich des Montageelements 230 zu einer exakten Positionierung des Montageelements 230 und damit des Verbindungselements 216 zusammenwirkt. Hierzu kann der Eingriffsbereich 232 beispielsweise eine umlaufende Ringschulter 234 aufweisen, die eine vertikal verlaufende Innenwandung aufweist, die mit der vertikalen Außenwandung des unteren Bereichs des Montageelements 230 zusammenwirkt. Diese Außenwandung im unteren Bereich des Montageelements 230 und die Innenwandung der Ringschulter 234 können exakt koaxial zur Längsachse L ausgebildet sein. Die Ringschulter bzw. deren zur Längsachse L koaxial verlaufende (vertikale) Innenwandung kann dabei in einem gegenüber der Oberfläche der oberen Gehäusewandung vorspringenden Bereich der Gehäusewandung und/oder in einem gegenüber der Oberfläche nach innen versetzten Bereich der Gehäusewandung ausgebildet sein. Somit kann eine exakte Positionierung des Verbindungselements 216 dadurch erreicht werden, dass der untere Bereich des Montageelements 230 in Eingriff mit dem Eingriffsbereich 232 gebracht wird.

Anstelle einer umlaufenden Ringschulter ist es selbstverständlich auch möglich, nur abschnittsweise um den Umfang des Montageelements 230 verteilte Elemente oder Bereiche vorzusehen, die in analoger Weise eine exakte Positionierung des Verbindungselements 216 bewirken.

Das Montageelement 230 kann auch gegenüber dem Verbindungselement 216 arretierbar ausgebildet sein, beispielsweise mittels einer oder mehrerer Madenschrauben 236, die sich, senkrecht zur Längsachse L, in der Wandung des Montageelements 230 nach innen in Richtung auf das Verbindungselement 216 erstrecken.

Damit kann die vorstehend beschriebene Montage der Stromübertragungseinrichtung 200 wie folgt ergänzt werden: Nach dem Verbinden der die Kontakteinrichtungen 210 und 222 bildenden Platine mit dem Verbindungselement 216 kann das Montageelement 230 in den Eingriffsbereich 232 nach unten geschoben und in dieser Position arretiert werden. Anschließend können die Verbindungsstege 228 aufgetrennt und der Verschlussdeckel 204 eingesetzt und mit dem Gehäuse 202 verschraubt werden. Derart vormontiert kann die Stromübertragungseinrichtung 200 aufbewahrt, verpackt oder auch in eine Wägevorrichtung 100 eingebaut werden.

Die Stromübertragungseinrichtung 200 kann an jeder geeigneten Position innerhalb des Gehäuses 102 vorgesehen sein, beispielsweise nahe dem Befestigungspunkt des Kraftaufnehmers an der Bodenplatte 104 oder in der Nähe des Lasteinleitungsbereichs 122 oder im Bereich eines Drehgelenks einer Hebelmechanik des Kraftaufnehmers 116.

Um den durchzündungssicheren Ringspalt zwischen dem Verbindungselement 216 und der Innenwandung der Durchgriffsöffnung 214 gegenüber dem Eindringen von Partikeln, Wasser oder dergleichen zu sichern, kann das Montageelement 230 zusammen mit dem Eingriffsbereich 232 eine Labyrinthdichtung 238 bilden. Dabei kann insbesondere die untere Stirnseite des Montageelements 230 als Begrenzungswandung für die Labyrinthdichtung 238 wirken.

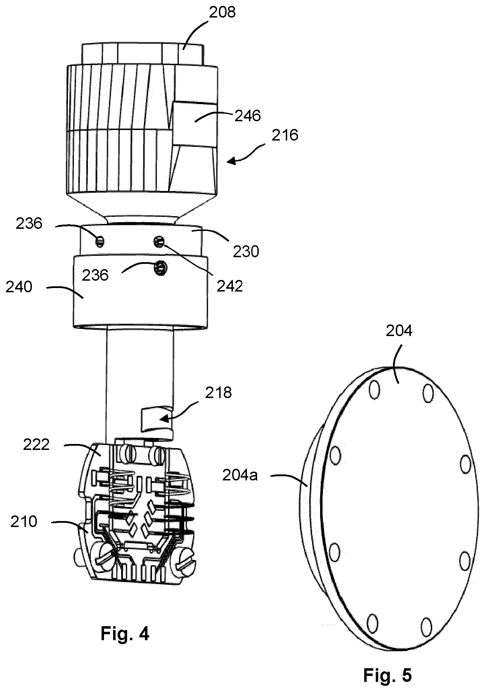

Wie aus Fig. 3 erkennbar, kann das Montageelement 230 von einem Ringelement 240 umgriffen werden, was ebenfalls zur Bildung der Labyrinthdichtung 238 beiträgt. Das Ringelement 240 weist einen inneren Querschnitt auf, der im Wesentlichen dem äußeren Querschnitt des Montageelements 230 entspricht, so dass das Ringelement 240 das Montageelement 230 im Wesentlichen dicht umschließt. Das Ringelement kann ebenfalls mittels einer Madenschraube 236 auf dem Montageelement 230 fixiert werden. Um eine axiale Positionierung des Ringelements 240 auf dem Montageelement 230 zu erreichen, kann das Montageelement 230 zwei Ausnehmungen 242 aufweisen, in welche die Madenschraube 236 im Ringelement 240 eingreifen kann. Eine erste Ausnehmung 242, die in Fig. 4 sichtbar ist, kann dazu dienen, das Ringelement 240 in einem nach oben geschobenen Zustand so auf dem Montageelement 230 zu arretieren, dass das Verbindungselement 230 in den Eingangsbereich 232 eingreifen kann. In einem nach unten geschobenen Zustand, wie er in Fig. 4 dargestellt ist, greift die Madenschraube 236 im Ringelement 240 in eine weitere Ausnehmung im Montageelement 230 ein, um das Ringelement in einer nach unten geschobenen Position auf dem Verbindungselement 216 zu arretieren. In dieser Position wird die Labyrinthdichtung 238, wie aus Fig. 3 ersichtlich, durch den Eingriffsbereich 232, die Ringschulter 234, die untere Stirnseite des Montageelements 230 und das Ringelement 240 gebildet.

In dieser nach unten geschobenen Arbeitsposition kann die der oberen Gehäusewandung zugewandte untere Stirnseite des Ringelements 240 auch als Begrenzungsanschlag wirken, um eine axiale Bewegung des Verbindungselements 216 in das Gehäuse 202 hinein zu begrenzen.

Eine derartige Begrenzung des Verschiebungswegs für das Verbindungselement 216 kann auch dadurch bewirkt werden, dass der Verschlussdeckel 204 einen sich im Wesentlichen horizontal in das Gehäuseinnere ragenden Flansch 204a aufweist, welcher in eine im Umfang des sich in das Gehäuseinnere erstreckenden Bereichs vorgesehene Nut 244 des Verbindungselements eingreift. Die horizontal verlaufenden Flächen der Nut 244 weisen dabei einen axialen Abstand auf, der, bezogen auf die Dicke des Flansches 204a, so gewählt ist, dass das Verbindungselement 216 eine ausreichend große axiale Verschiebebewegung ausführen kann.

Der Einbau der Stromübertragungseinrichtung 200 in eine Kraftmessvorrichtung, beispielsweise in Form der Wägevorrichtung 100, kann wie nachstehend beschrieben erfolgen:
Die wie vorstehend erläuterte vormontierte Stromübertragungseinrichtung 200 wird mit in den Eingriffsbereich 234 eingreifendem Montageelement 230 (in einem justierten und ggf. arretierten Zustand der Stromübertragungseinrichtung 200) mit dem ortsfesten Bereich der Wägevorrichtung 100 verbunden. Hierzu kann das Gehäuse 202 mit der Bodenplatte 104 des Gehäuses 102 der Wägevorrichtung 100 verbunden werden. Dies kann beispielsweise durch Verschrauben oder dergleichen erfolgen. Zur Verbindung des Verbindungselements 216 mit dem Lastaufnehmer bzw. Lasteinleitungsbereich des Kraftaufnehmers 116 kann, wie aus Fig. 2 ersichtlich, ein oberer Kopfbereich des Verbindungselements 216, der im Wesentlichen kreiszylindrisch ausgestaltet ist, in einem geeigneten axialen Bereich zwei parallel zueinander verlaufende Flächen 246 aufweisen. Mit diesem axialen Bereich kann der Kopfbereich des Verbindungselements 216 in einen Schlitz eines gabelförmig ausgebildeten Bereichs in der Trägerplatte 124 eingreifen. Auf den oberen Kopfbereich des Verbindungselements kann dann eine Mutter 248 aufgeschraubt werden, um das Verbindungselement 216 mechanisch fest mit der Trägerplatte 124 zu verbinden. Anschließend kann die obere Gehäusewandung 108 des Gehäuses 102 aufgesetzt werden, wobei der obere Bereich des Verbindungselements 216 und drei weitere sich von der Trägerplatte 124 nach oben erstreckende Elemente die obere Gehäusewandung 108 durchgreifen. Anschließend können die Labyrinthdichtungen 112 sowohl im Bereich des Durchgriffs des oberen Bereichs des Verbindungselements 216 durch die obere Gehäusewandung 108 als auch im Bereich der weiteren Elemente hergestellt und die Lastplatte 110 montiert werden. In einem nächsten Schritt kann die weitere Vorrichtung, beispielsweise das Förderband, auf die Lastplatte aufgesetzt und mit dieser verbunden werden. Das Kabel 220 kann mit einer elektrischen Einrichtung der weiteren Vorrichtung, beispielsweise dem Antrieb des Förderbandes, verbunden werden.

Nach diesem Montagevorgang kann das Montageelement 230 in seine obere Position geschoben und in dieser arretiert werden. Schließlich kann das Ringelement 240 in seine untere Position gebracht und in dieser arretiert werden. Schließlich kann das mittels der gehäusefesten Kabeldurchführung 206 aus dem Gehäuse 202 der Stromübertragungseinrichtung 200 herausgeführte Kabel mit der Buchseneinrichtung 114 verbunden werden. Nach dem Anbringen der Gehäuseseitenwandung ist der Montagevorgang abgeschlossen.

Es sei darauf hingewiesen, dass selbstverständlich auch ein oder mehrere Schritte des vorstehend erläuterten Montagevorgangs in einer anderen Reihenfolge ausgeführt werden können. Beispielsweise kann das Gehäuse 102 kann auch als Stülpgehäuse ausgebildet sein, d.h. die obere Gehäusewandung 108 und die Seitenwandung 106 sind einteilig ausgebildet.

Die modulartig ausgebildete Stromübertragungseinrichtung 200 kann somit auf einfache Weise auch bei bereits bestehenden Kraftmessvorrichtungen durch geringe Änderungsmaßnahmen nachgerüstet werden, um so die betreffende Kraftmessvorrichtung explosionssicher zu gestalten oder einen Explosionsschutz mit zu bewirken. Durch die Modulbauweise kann ein und dieselbe Stromübertragungseinrichtung 200 auch für unterschiedlichste Typen von Kraftmessvorrichtungen eingesetzt werden.

Abschließend sei darauf hingewiesen, dass, zusätzlich zu der vorstehend beschriebenen kraftnebenschlussarmen elektrischen Verbindung auch weitere, nicht eigensicher ausgestaltete elektrische oder elektronische Komponenten in dem Gehäuse 202 angeordnet werden können, so dass im Gehäuse 102 der Wägevorrichtung 100 keine kritischen Komponenten mehr aufgenommen sind, die ein Zünden einer explosionsgefährdeten Atmosphäre innerhalb des Gehäuses 102 verursachen können.

Die gesamte Stromübertragungseinrichtung 200 kann auch außerhalb des Gehäuses einer Kraftmessvorrichtung angeordnet werden, beispielsweise auf demselben Grundgestell oder mit dem Gehäuse der Kraftmessvorrichtung verbunden.

### Bezugszeichenliste

- 100: Wägevorrichtung
- 102: Gehäuse
- 104: Bodenplatte
- 106: umlaufende Seitenwandung
- 108: oberer Gehäusewandung
- 110: Lastplatte
- 112: Labyrinthdichtung
- 114: Buchseneinrichtung
- 116: Kraftaufnehmer
- 118: Grundkörper
- 120: Basisteil
- 122: Lasteinleitungsbereich
- 124: Trägerplatte
- 126: Kabelverbindung

- 200: Stromübertragungseinrichtung
- 202: Gehäuse
- 204: Verschlussdeckel
- 206: Kabeldurchführung
- 208: Verbindungsteil
- 210: gehäusefeste Kontakteinrichtung
- 210a: Anschlusskontakt
- 212: Schraube
- 214: Durchgriffsöffnung
- 216: Verbindungselement
- 218: Ausnehmung
- 220: Kabel
- 222: bewegliche Kontakteinrichtung
- 224: Schraube
- 226: Kontaktbrücke
- 228: Verbindungssteg
- 230: Montageelement
- 232: Eingriffsbereich
- 234: Ringschulter
- 236: Madenschraube
- 238: Labyrinthdichtung
- 240: Ringelement
- 242: Ausnehmung
- 244: Nut
- 246: Fläche

- L: Längsachse

## Patentansprüche

1. Stromübertragungseinrichtung für eine Kraftmessvorrichtung, insbesondere eine Wägevorrichtung, wobei die Kraftmessvorrichtung (100) ein Gehäuse (102) und einen Basisbereich sowie einen beweglichen Bereich aufweist, welche relativ zueinander bewegbar sind,
(a) mit einem eine Gehäusewandung aufweisenden druckfesten Gehäuse (202), welches mit dem Basisbereich der Kraftmessvorrichtung (100) mechanisch fest verbindbar ist, und einem Verbindungselement (216), welches an einem äußeren Endbereich, welcher aus dem druckfesten Gehäuse (202) herausragt, in einem Betriebszustand mit dem beweglichen Bereich der Kraftmessvorrichtung (100) mechanisch fest verbindbar ist,
(b) wobei das Verbindungselement (216) so ausgebildet ist, dass es im Betriebszustand die Gehäusewandung berührungslos und durchzündungssicher durchgreift,
(c) wobei das Verbindungselement (216) als beweglicher Kabeldurchtritt ausgebildet ist, wobei ein erstes Kabel (220) mit wenigstens einer elektrischen Leitung am äußeren Endbereich in das Verbindungselement (216) geführt ist, dieses durchgreift und an einem inneren Endbereich des Verbindungselements (216) in das druckfeste Gehäuse (202) geführt ist,
(d) wobei das druckfeste Gehäuse (202) eine gehäusefeste Kabeldurchführung (206) aufweist, welche zur druckfesten und durchzündungsdichten Durchführung eines zweiten Kabels mit wenigstens einer elektrischen Leitung durch die Gehäusewandung ausgebildet ist,
(e) wobei an dem inneren Endbereich des Verbindungselements (216) eine mit diesem mechanisch fest verbundene bewegliche Kontakteinrichtung (222) und in dem druckfesten Gehäuse (202) eine mit dem druckfesten Gehäuse mechanisch fest verbundene gehäusefeste Kontakteinrichtung (210) vorgesehen ist, wobei zwischen der beweglichen (222) und der gehäusefesten (210) Kontakteinrichtung wenigstens eine flexible elektrische Kontaktbrücke (226) ausgebildet ist und
(f) wobei die wenigstens eine Leitung des ersten Kabels mechanisch und elektrisch mit der beweglichen Kontakteinrichtung (222) und die wenigstens eine Leitung des zweiten Kabels mechanisch und elektrisch mit der ortsfesten Kontakteinrichtung (210) derart verbunden sind, dass über die wenigstens eine Kontaktbrücke (226) ein elektrischer Kontakt zwischen der wenigstens einen Leitung des ersten Kabels und der wenigstens einen Leitung des zweiten Kabels ausgebildet ist, und
(g) wobei die Stromübertragungseinrichtung (200) derart ausgebildet ist, dass sie in einem Gehäuse (102) oder außen an einem Gehäuse (102) der Kraftmessvorrichtung (100) montierbar ist.

2. Stromübertragungseinrichtung nach Anspruch 1, **dadurch gekennzeichnet, dass** das Verbindungselement (216) als im Wesentlichen zylindrisches Element ausgebildet ist und dass die Gehäusewandung in einem Bereich einer Durchgriffsöffnung (214) für das Verbindungselement (216) eine vorbestimmte Dicke und die Durchgriffsöffnung (214) einen vorbestimmten Querschnitt aufweisen, die so gewählt sind, dass im Betriebszustand ein durchzündungssicherer Ringspalt zwischen dem Verbindungselement (216) und einer Innenwandung der Durchgriffsöffnung (214) ausgebildet ist.

3. Stromübertragungseinrichtung nach Anspruch 1 oder 2, **dadurch**
**gekennzeichnet, dass** das druckfeste Gehäuse (202) einen lösbar mit dem druckfesten Gehäuse verbundenen Gehäusedeckel (204) aufweist, der so ausgebildet ist, dass der Gehäusedeckel (204) mit einem sich in das Gehäuseinnere erstreckenden Eingriffsbereich (204a) mit wenigstens einer Anschlagschulter am Außenumfang des Verbindungselements (216) derart zusammenwirkt, dass ein Begrenzungsanschlag hinsichtlich der Bewegung des Verbindungselements (216) bewirkt ist, zumindest gegenüber einer Bewegung des Verbindungselements (216) in einer Bewegungsrichtung aus dem druckfesten Gehäuse (202) heraus.

4. Stromübertragungseinrichtung nach Anspruch 3, **dadurch gekennzeichnet, dass** der Gehäusedeckel (204) einen sich in das druckfeste Gehäuse (202) erstreckenden, vorzugsweise umlaufenden Flansch aufweist (204a), welcher den Eingriffsbereich bildet.

5. Stromübertragungseinrichtung nach Anspruch 3 oder 4, **dadurch**
**gekennzeichnet, dass** die wenigstens eine Anschlagschulter durch eine Ausnehmung (218) im Außenumfang des Verbindungselements (216) gebildet ist.

6. Stromübertragungseinrichtung nach einem der Ansprüche 2 bis 5, **dadurch gekennzeichnet,**
(a) **dass** die Durchgriffsöffnung (214) für das Verbindungselement (216) an einem, bezogen auf das druckfeste Gehäuse (202), nach außen gerichteten Bereich als Eingriffsbereich (232) für ein ringförmiges Montageelement (230) ausgebildet ist, welches das Verbindungselement (216) umgreift und auf diesem in der Richtung einer Längsachse (E) des Verbindungselements (216) zwischen einer Justierposition und einer Betriebsposition verschiebbar ausgebildet ist, wobei das Montageelement (230) und der Eingriffsbereich (232) so ausgebildet sind und bei in der Justierposition befindlichem Montageelement (230) derart zusammenwirken, dass das Verbindungselement (216) so im druckfesten Gehäuse (202) positioniert ist, dass, mit Ausnahme des Eingriffsbereichs (232), der durchzündungssichere Ringspalt zwischen dem Verbindungselement (216) und einer Innenwandung der Durchgriffsöffnung (214) ausgebildet ist, und
(b) **dass** das Montageelement (230) in der Betriebsposition das Verbindungselement (216) freigibt.

7. Stromübertragungseinrichtung nach Anspruch 6, **dadurch gekennzeichnet, dass** das Montageelement (230) in der Betriebsposition und/oder der Justierposition am Verbindungselement (216) arretierbar ausgebildet ist.

8. Stromübertragungseinrichtung nach Anspruch 7, **dadurch gekennzeichnet, dass** das Montageelement (230) derart ausgebildet ist, dass es in der Betriebsposition eine Labyrinthdichtung (238) mit bildet.

9. Stromübertragungseinrichtung nach Anspruch 8, **dadurch gekennzeichnet, dass** das Montageelement (230) von einem Ringelement (240) umgriffen ist, welches von einer Montageposition in eine Arbeitsposition bewegbar ist, wobei das Ringelement (240) in der Arbeitsposition gegenüber dem Montageelement (230) in Richtung auf das druckfeste Gehäuse (202) versetzt positioniert ist und mit dem Montageelement (230) und dem druckfesten Gehäuse (202) die Labyrinthdichtung (238) bildet.

10. Stromübertragungseinrichtung nach Anspruch 9, **dadurch gekennzeichnet, dass** das druckfeste Gehäuse (202) einen die Durchgriffsöffnung (214) umgebenden vorspringenden Flansch (234) zur Mitbildung der Labyrinthdichtung aufweist, welcher vorzugsweise von dem Ringelement (240) umgriffen ist, wobei zwischen einer Innenwandung des Ringelements (240) und einer Außenwandung des Flansches (234) ein Ringspalt gebildet ist.

11. Stromübertragungseinrichtung nach einem der vorhergehenden Ansprüche, **dadurch gekennzeichnet, dass** die bewegliche Kontakteinrichtung (222) und die gehäusefeste Kontakteinrichtung (210) jeweils als Leiterplatte ausgebildet sind.

12. Stromübertragungseinrichtung nach Anspruch 11, **dadurch gekennzeichnet, dass** die wenigstens eine flexible elektrische Kontaktbrücke (226) als flexibler elektrischer Leiter, insbesondere als metallischer Leiter, beispielsweise Goldband oder Draht, ausgebildet ist.

13. Stromübertragungseinrichtung nach Anspruch 11 oder 12, **dadurch gekennzeichnet, dass** die die bewegliche Kontakteinrichtung (222) und die gehäusefeste Kontakteinrichtung (210) bildenden Leiterplatten in einem Montagezustand miteinander mechanisch verbunden sind.

14. Stromübertragungseinrichtung nach Anspruch 13, **dadurch gekennzeichnet, dass** die Leiterplatten über Trennstellen (228) verbunden sind, wobei die Leiterplatten vorzugsweise gemeinsam einstückig hergestellt sind und die Trennstellen (228) Teil der Leiterplatten sind.

15. Kraftmessvorrichtung, insbesondere Wägevorrichtung, mit einer Stromübertragungseinrichtung (200) nach einem der vorhergehenden Ansprüche.

## Claims

1. Current transmission device for a force measuring apparatus, in particular a weighing apparatus, wherein the force measuring apparatus (100) has a housing (102), and has a base region and a movable region which can be moved relative to one another,
(a) comprising a pressure-resistant housing (202) which has a housing wall and can be fixedly connected mechanically to the base region of the force measuring apparatus (100), and comprising a connecting element (216) which, at an outer end region protruding from the pressure-resistant housing (202), can be fixedly connected mechanically to the movable region of the force measuring apparatus (100) in an operating state,
(b) wherein the connecting element (216) is designed such that, in the operating state, it passes through the housing wall in a contactless and arc-through-resistant manner,
(c) wherein the connecting element (216) is designed as a movable cable passage, wherein a first cable (220), which has at least one electrical line, is guided into the connecting element (216) at the outer end region, passes through the connecting element and is guided into the pressure-resistant housing (202) at an inner end region of the connecting element (216),
(d) wherein the pressure-resistant housing (202) comprises a cable bushing (206) which is fixed to the housing and designed for pressure-resistant and arc-through-resistant passage of a second cable, which has at least one electrical line, through the housing wall,
(e) wherein a movable contact device (222) is provided on the inner end region of the connecting element (216) and is fixedly connected mechanically thereto, and a contact device (210), which is fixed to the housing, is provided in the pressure-resistant housing (202) and is fixedly connected mechanically to the pressure-resistant housing, wherein at least one flexible electrical contact bridge (226) is formed between the contact device that is movable (222) and the contact device that is fixed to the housing (210), and
(f) wherein the at least one line of the first cable is mechanically and electrically connected to the movable contact device (222), and the at least one line of the second cable is mechanically and electrically connected to the stationary contact device (210) such that electrical contact is formed between the at least one line of the first cable and the at least one line of the second cable via the at least one contact bridge (226), and
(g) wherein the current transmission device (200) is designed such that it can be mounted in a housing (102) or on the outside of a housing (102) of the force measuring apparatus (100).

2. Current transmission device according to claim 1, **characterized in that** the connecting element (216) is designed as a substantially cylindrical element **and in that** the housing wall has a predetermined thickness in a region of a passage opening (214) for the connecting element (216), and the passage opening (214) has a predetermined cross section, which thickness and cross section are selected such that, in the operating state, an arc-through-resistant annular gap is formed between the connecting element (216) and an inner wall of the passage opening (214).

3. Current transmission device according to claim 1 or claim 2,
**characterized in that** the pressure-resistant housing (202) comprises a housing cover (204) which is detachably connected to the pressure-resistant housing and is designed such that the housing cover (204) interacts with an engagement region (204a), which extends into the interior of the housing and has at least one stop shoulder on the outer circumference of the connecting element (216), such that a limit stop is effected with regard to the movement of the connecting element (216), at least with respect to a movement of the connecting element (216) in a movement direction out of the pressure-resistant housing (202).

4. Current transmission device according to claim 3, **characterized in that** the housing cover (204) comprises (204a) a preferably circumferential flange extending into the pressure-resistant housing (202), which flange forms the engagement region.

5. Current transmission device according to claim 3 or claim 4,
**characterized in that** the at least one stop shoulder is formed by a recess (218) in the outer circumference of the connecting element (216).

6. Current transmission device according to any of claims 2 to 5,
**characterized in that**
(a) the passage opening (214) for the connecting element (216), on an outwardly directed region with respect to the pressure-resistant housing (202), is designed as an engagement region (232) for an annular mounting element (230) which encompasses the connecting element (216) and is designed to be movable on said connecting element between an adjustment position and an operating position in the direction of a longitudinal axis (E) of the connecting element (216), the mounting element (230) and the engagement region (232) being designed and, when the mounting element (230) is in the adjustment position, interacting such that the connecting element (216) is positioned in the pressure-resistant housing (202) such that, with the exception of the engagement region (232), the arc-through-resistant annular gap is formed between the connecting element (216) and an inner wall of the passage opening (214), and
(b) **in that** the mounting element (230) releases the connecting element (216) in the operating position.

7. Current transmission device according to claim 6, **characterized in that** the mounting element (230) is designed to be lockable on the connecting element (216) in the operating position and/or the adjustment position.

8. Current transmission device according to claim 7, **characterized in that** the mounting element (230) is designed such that it jointly forms a labyrinth seal (238) in the operating position.

9. Current transmission device according to claim 8, **characterized in that** the mounting element (230) is encompassed by an annular element (240) which can be moved from a mounting position into a working position, the annular element (240), in the working position, being positioned offset in the direction of the pressure-resistant housing (202) with respect to the mounting element (230), and forming the labyrinth seal (238) together with the mounting element (230) and the pressure-resistant housing (202).

10. Current transmission device according to claim 9, **characterized in that** the pressure-resistant housing (202) comprises a projecting flange (234) surrounding the passage opening (214) to jointly form the labyrinth seal, which flange is preferably encompassed by the annular element (240), an annular gap being formed between an inner wall of the annular element (240) and an outer wall of the flange (234).

11. Current transmission device according to any of the preceding claims,
**characterized in that** the movable contact device (222) and the contact device (210) fixed to the housing are each designed as a printed circuit board.

12. Current transmission device according to claim 11, **characterized in that** the at least one flexible electrical contact bridge (226) is designed as a flexible electrical conductor, in particular as a metal conductor, for example a gold strip or wire.

13. Current transmission device according to claim 11 or claim 12,
**characterized in that** the printed circuit boards forming the movable contact device (222) and the contact device (210) fixed to the housing are mechanically connected to one another in a mounted state.

14. Current transmission device according to claim 13, **characterized in that** the printed circuit boards are connected via separating points (228), the printed circuit boards preferably being manufactured together in one piece and the separating points (228) being part of the printed circuit boards.

15. Force measuring apparatus, in particular a weighing apparatus, comprising a current transmission device (200) according to any of the preceding claims.

## Revendications

1. Appareil de transmission de courant pour un dispositif de mesure de force, en particulier un dispositif de pesage, dans lequel le dispositif de mesure de force (100) présente un boîtier (102) et une zone de base ainsi qu'une zone mobile, qui sont mobiles l'une par rapport à l'autre,
(a) comportant un boîtier (202) résistant à la pression, présentant une paroi de boîtier, lequel peut être relié mécaniquement à demeure à la zone de base du dispositif de mesure de force (100), et un élément de liaison (216) lequel peut être relié mécaniquement à demeure à la zone mobile du dispositif de mesure de force (100) au niveau d'une zone d'extrémité extérieure qui fait saillie hors du boîtier (202) résistant à la pression, dans un état de fonctionnement,
(b) dans lequel l'élément de liaison (216) est conçu de telle sorte qu'en état de fonctionnement, il traverse la paroi du boîtier sans contact et sans risque d'inflammation,
(c) dans lequel l'élément de liaison (216) est conçu comme un passage de câble mobile, dans lequel un premier câble (220) comportant au moins une ligne électrique est introduit dans l'élément de liaison (216) au niveau de la zone d'extrémité extérieure, traverse celui-ci et est introduit dans le boîtier (202) résistant à la pression au niveau d'une zone d'extrémité intérieure de l'élément de liaison (216),
(d) dans lequel le boîtier (202) résistant à la pression présente un passage de câble (206) solidaire du boîtier, lequel est conçu pour le passage résistant à la pression et sans risque d'inflammation d'un second câble comportant au moins une ligne électrique à travers la paroi de boîtier,
(e) dans lequel un appareil de contact mobile (222) relié mécaniquement à demeure à l'élément de liaison (216) est prévu au niveau de la zone d'extrémité intérieure de celui-ci et un appareil de contact (210) solidaire du boîtier et relié mécaniquement à demeure au boîtier résistant à la pression est prévu dans le boîtier (202) résistant à la pression, dans lequel au moins un pont de contact électrique flexible (226) est conçu entre l'appareil de contact mobile (222) et l'appareil de contact (210) solidaire du boîtier et
(f) dans lequel l'au moins une ligne du premier câble est reliée mécaniquement et électriquement à l'appareil de contact mobile (222) et l'au moins une ligne du second câble est reliée mécaniquement et électriquement à l'appareil de contact fixe (210) de telle sorte qu'un contact électrique est conçu entre l'au moins une ligne du premier câble et l'au moins une ligne du second câble par l'intermédiaire de l'au moins un pont de contact (226), et
(g) dans lequel l'appareil de transmission de courant (200) est conçu de telle sorte qu'il peut être monté dans un boîtier (102) ou à l'extérieur d'un boîtier (102) du dispositif de mesure de force (100).

2. Appareil de transmission de courant selon la revendication 1,
**caractérisé en ce que** l'élément de liaison (216) est conçu sous la forme d'un élément essentiellement cylindrique **et en ce que** la paroi du boîtier présente, dans une zone d'une ouverture de passage (214) pour l'élément de liaison (216), une épaisseur prédéterminée et l'ouverture de passage (214) présente une section transversale prédéterminée, qui sont choisies de telle sorte qu'en état de fonctionnement, un interstice annulaire sans risque d'inflammation est conçu entre l'élément de liaison (216) et une paroi intérieure de l'ouverture de passage (214).

3. Appareil de transmission de courant selon la revendication 1 ou 2,
**caractérisé en ce que** le boîtier (202) résistant à la pression présente un couvercle de boîtier (204) relié de manière amovible au boîtier résistant à la pression, qui est conçu de telle sorte que le couvercle de boîtier (204) coopère par une zone de mise en prise (204a) s'étendant à l'intérieur du boîtier avec au moins un épaulement de butée sur la périphérie extérieure de l'élément de liaison (216) de telle sorte, qu'une butée de limitation est provoquée en ce qui concerne le mouvement de l'élément de liaison (216), au moins par rapport à un mouvement de l'élément de liaison (216) dans une direction de mouvement hors du boîtier (202) résistant à la pression.

4. Appareil de transmission de courant selon la revendication 3,
**caractérisé en ce que** le couvercle de boîtier (204) présente une bride (204a), de préférence périphérique, s'étendant dans le boîtier (202) résistant à la pression, laquelle bride forme la zone de mise en prise.

5. Appareil de transmission de courant selon la revendication 3 ou 4,
**caractérisé en ce que** l'au moins un épaulement de butée est formé par un évidement (218) dans la périphérie extérieure de l'élément de liaison (216).

6. Appareil de transmission de courant selon l'une des revendications 2 à 5,
**caractérisé en ce**
(a) **que** l'ouverture de passage (214) pour l'élément de liaison (216) est conçue, dans une zone dirigée vers l'extérieur par rapport au boîtier (202) résistant à la pression, sous la forme d'une zone de mise en prise (232) pour un élément de montage annulaire (230) qui entoure l'élément de liaison (216) et qui est conçu de manière à pouvoir être déplacé sur celui-ci dans la direction d'un axe longitudinal (E) de l'élément de liaison (216) entre une position d'ajustement et une position de fonctionnement, dans lequel l'élément de montage (230) et la zone de mise en prise (232) sont conçus et coopèrent, lorsque l'élément de montage (230) se trouve dans la position d'ajustement, de telle sorte que l'élément de liaison (216) est positionné dans le boîtier (202) résistant à la pression de telle sorte que, à l'exception de la zone de mise en prise (232), l'espace annulaire sans risque d'inflammation est conçu entre l'élément de liaison (216) et une paroi intérieure de l'ouverture de passage (214), et
(b) **que** l'élément de montage (230) libère l'élément de liaison (216) dans la position de fonctionnement.

7. Appareil de transmission de courant selon la revendication 6,
**caractérisé en ce que** l'élément de montage (230) est conçu de manière à pouvoir être bloqué dans la position de fonctionnement et/ou dans la position d'ajustement sur l'élément de liaison (216).

8. Appareil de transmission de courant selon la revendication 7,
**caractérisé en ce que** l'élément de montage (230) est conçu de telle sorte qu'il forme conjointement un joint à labyrinthe (238) dans la position de fonctionnement.

9. Appareil de transmission de courant selon la revendication 8,
**caractérisé en ce que** l'élément de montage (230) est entouré par un élément annulaire (240) qui peut être déplacé d'une position de montage à une position de travail, dans lequel l'élément annulaire (240) est positionné dans la position de travail de manière décalée par rapport à l'élément de montage (230) en direction du boîtier (202) résistant à la pression et forme avec l'élément de montage (230) et le boîtier (202) résistant à la pression le joint à labyrinthe (238).

10. Appareil de transmission de courant selon la revendication 9,
**caractérisé en ce que** le boîtier (202) résistant à la pression présente une bride (234) en saillie entourant l'ouverture de passage (214) pour la formation conjointe du joint à labyrinthe, laquelle bride est de préférence entourée par l'élément annulaire (240), dans lequel une fente annulaire est formée entre une paroi intérieure de l'élément annulaire (240) et une paroi extérieure de la bride (234).

11. Appareil de transmission de courant selon l'une des revendications précédentes, **caractérisé en ce que** l'appareil de contact mobile (222) et l'appareil de contact (210) solidaire du boîtier sont chacun conçus sous forme de carte de circuit imprimé.

12. Appareil de transmission de courant selon la revendication 11,
**caractérisé en ce que** l'au moins un pont de contact électrique flexible (226) est conçu comme un conducteur électrique flexible, en particulier comme un conducteur métallique, par exemple une bande d'or ou un fil.

13. Appareil de transmission de courant selon la revendication 11 ou 12,
**caractérisé en ce que** les cartes de circuits imprimés formant l'appareil de contact mobile (222) et l'appareil de contact (210) solidaire du boîtier sont reliées mécaniquement entre elles dans un état de montage.

14. Appareil de transmission de courant selon la revendication 13,
**caractérisé en ce que** les cartes de circuits imprimés sont reliées par des points de séparation (228), dans lequel les cartes de circuits imprimés sont de préférence fabriquées ensemble d'un seul tenant et les points de séparation (228) font partie des cartes de circuits imprimés.

15. Dispositif de mesure de force, notamment dispositif de pesage, comportant un appareil de transmission de courant (200) selon l'une des revendications précédentes.
